# EUROPÄISCHE PATENTSCHRIFT

(11) **EP 2 358 554 B1**
(45) Veröffentlichungstag und Bekanntmachung des Hinweises auf die Patenterteilung: **03.09.2014**
(21) Anmeldenummer: 09817081.4
(22) Anmeldetag: 15.12.2009
(51) Int. Cl.: B60J 7/12, B60J 7/00

(54) **VERDECK EINES CABRIOLET-FAHRZEUGS MIT WENIGSTENS ZWEI DACHSEGMENTEN UND EINEM INNENHIMMEL**
CABRIO TOP WITH AT LEAST TWO ROOF SEGMENTS AND A HEADLINER
PAVILLON DE CABRIOLET AVEC AU MOINS DEUX SEGMENTS DE TOIT ET UNE GARNITURE

(30) Priorität: 17.12.2008 DE 102008063451
(43) Veröffentlichungstag der Anmeldung: 24.08.2011
(73) Patentinhaber: Wilhelm Karmann GmbH, 49084 Osnabrück (DE); Valmet Automotive Oy, 23500 Uusikaupunki (FI)
(72) Erfinder: RICHTER, Markus, 49545 Tecklenburg (DE); RADEMACHER, Udo, 49084 Osnabrück (DE)
(74) Vertreter: Kronthaler, Wolfgang N.K.
(86) Internationale Anmeldenummer: PCT/DE2009/001768
(87) Internationale Veröffentlichungsnummer: WO 2010/075842

(56) Entgegenhaltungen:
- EP-A1- 1 642 756
- DE-A1- 19 921 305

## Beschreibung

Die Erfindung betrifft ein Verdeck eines Cabriolet-Fahrzeugs mit wenigstens zwei Dachsegmenten, welche mittels eines Verdeckgestänges zwischen einer einen Fahrzeuginnenraum abdeckenden geschlossenen Position und einer den Fahrzeuginnenraum wenigstens bereichsweise freigebenden offenen Position verfahrbar sind, und einem dem Fahrzeuginnenraum zugewandten Innenhimmel nach der im Oberbegriff des Patentanspruches 1 näher definierten Art.
Aus der DE 199 21 305 ist ein Faltverdeck für ein Fahrzeug, insbesondere einen Personenkraftwagen, welches sich aus einem Verdeckgestell und einem außenseitig am Verdeckgestell aufgespannten Verdeckbezug zusammensetzt, wobei das mit aufbauseitig angeordneten Verdecklagern zusammenwirkende Verdeckgestell einen vorderen benachbart dem Windschutzscheibenrahmen verlaufenden großflächigen formsteifen Verdeckabschnitt, einen Hauptspriegel und einen heckseitigen Spannbügel umfasst. Auf der einem Fahrgastraum zugewandten Seite des Verdeckgestells ist dabei ein Innenhimmel vorgesehen, der sich aus einem Mittelteil und zwei an die Längsseiten des Mittelteils angebundenen Seitenteilen zusammensetzt. In einen gemeinsamen Verbindungsbereich von Mittelteil und Seitenteil ist am Innenhimmel auf der dem Fahrgastraum abgekehrten Seite eine längsverlaufende Halteschlaufe angeordnet, durch die ein Haltedraht hindurchführbar ist und welcher den in diesem Bereich lose an dem Verdeckgestell angeordneten Innenhimmel in geschlossener Position des Faltverdecks aufspannt.

Nachteilhafterweise sind die zur Spannung des Innenhimmels in Fahrzeugquerrichtung von dem Haltedraht über die Halteschlaufe übertragenen Kräfte bei einer derartigen Ausbildung des Faltverdecks gering, so dass eine gewünschte Spannung des Innenhimmels in Fahrzeugquerrichtung nicht oder nur unter erheblichem Aufwand gewährleistet werden kann.

Weiterhin bedingt ein derartig ausgebildetes Faltverdeck einen großen Aufwand zur Montage oder Auswechslung des Innenhimmels .

Es ist Aufgabe der vorliegenden Erfindung, ein Verdeck eines Cabriolet-Fahrzeugs mit einem Innenhimmel zu schaffen, bei welchem der Innenhimmel in geschlossener Position des Verdecks straff aufgespannt ist, bei einer Verdeckbewegung nicht hinderlich ist und auf einfache Weise montierbar ist.

Diese Aufgabe wird bei einem Verdeck eines Cabriolet-Fahrzeugs der eingangs genannten Art gemäß den Merkmalen des kennzeichnenden Teils des Patentanspruches 1 gelöst. Vorteilhafte Weiterbildungen eines Verdecks eines Cabriolet-Fahrzeugs ergeben sich aus den Unteransprüchen.

Es wird somit ein Verdeck eines Cabriolet-Fahrzeugs mit wenigstens zwei Dachsegmenten, welche mittels eines Verdeckgestänges zwischen einer einen Fahrzeuginnenraum abdeckenden geschlossenen und einer den Fahrzeuginnenraum wenigstens bereichsweise freigebenden offenen Position verfahrbar sind, und einem dem Fahrzeuginnenraum zugewandten Innenhimmel vorgeschlagen, welcher wenigstens bereichsweise lose an wenigstens einem Dachsegment und/oder dem Verdeckgestänge geführt ist, wobei eine Spanneinrichtung mit wenigstens einem Spannmittel und wenigstens einer Umlenkeinrichtung vorgesehen ist, bei der die Umlenkeinrichtung derart mit dem wenigstens einen Spannmittel zusammenwirkt, dass der Innenhimmel in geschlossener Position des Verdecks eine aufgespannte Position einnimmt. Erfindungsgemäß ist dabei vorgesehen, dass die wenigstens eine Umlenkeinrichtung lösbar an dem wenigstens einen Dachsegment und/oder dem Verdeckgestänge angeordnet ist.

Ein erfindungsgemäßes Verdeck, welches sowohl als ein Soft-Top-Verdeck als auch als ein Hard-Top-Verdeck ausgebildet sein kann, hat den Vorteil, dass der Innenhimmel auf einfache und somit schnelle Weise montierbar und austauschbar sowie in geschlossener Position des Verdecks passgenau aufspannbar ist. Zum Anordnen des Innenhimmels an dem Verdeck oder zum Entfernen des Innenhimmels von dem Verdeck ist lediglich ein Lösen der wenigstens einen Umlenkeinrichtung von dem wenigstens einen Dachsegment und/oder dem Verdeckgestänge bzw. ein Anordnen der wenigstens einen Umlenkeinrichtung an dem wenigstens einen Dachsegment und/oder dem Verdeckgestänge nötig.

Eine besonders vorteilhafte Weiterbildung der Erfindung sieht vor, dass die wenigstens eine Umlenkeinrichtung an dem wenigstens einen Dachsegment und/oder dem Verdeckgestänge anclipsbar ist. Ein Montieren bzw. Austauschen des Innenhimmels kann hierdurch weiter erleichtert und beschleunigt werden, da zum Montieren bzw. Austauschen des Innenhimmels keine Verbindungsmittel, wie Schrauben, Nähte, Nieten oder dergleichen nötig sind.

Bei einer vorteilhaften Ausbildung eines erfindungsgemäßen Verdecks kann die wenigstens eine Umlenkeinrichtung lösbar mit einer an wenigstens einem Dachsegment und/oder dem Verdeckgestänge angeordneten Leiste, insbesondere einer Leiste eines sich in Fahrzeuglängsrichtung erstreckenden seitlichen Dachrahmens eines Dachsegments, verbunden sein. Eine derartige Leiste kann vorteilhafterweise baulich auf die wenigstens eine Umlenkeinrichtung abgestimmt sein und derart an dem Dachsegment und/oder dem Verdeckgestänge positioniert werden, dass eine günstige Kraftübertragung des wenigstens einen Spannmittels auf den Innenhimmel zur Spannung des Innenhimmels in Fahrzeugquerrichtung erzielbar ist. Dies kann dadurch gewährleistet werden, dass die von dem Spannmittel über die Umlenkeinrichtung auf den Innenhimmel wirkende Kraft in Verdeckquerrichtung auf den Innenhimmel wirkt und somit einen optimalen Wirkungsgrad aufweist.

Die Leiste kann bei einer einfachen Ausbildung der Erfindung wenigstens einen im Querschnitt L-förmigen Bereich mit einer Bodenplatte und einer in einem vorzugsweise spitzen Winkel daran angeordneten Seitenplatte aufweisen, wobei in der Bodenplatte wenigstens eine Aussparung vorgesehen ist, und wobei die wenigstens eine Umlenkeinrichtung derart ausgebildet ist, dass sie mit einem ersten Bereich in die Aussparung einsetzbar und einem zweiten nasenförmigen Bereich in den spitzen Winkel der Leiste einclipsbar ist. Die Umlenkeinrichtung kann hierbei einfach und schnell an der Leiste angeordnet werden und von der Leiste gelöst werden, so dass auch der Innenhimmel einfach montierbar und austauschbar ist.

Bei einer besonders vorteilhaften Ausbildung eines erfindungsgemäßen Verdecks kann die Aussparung insbesondere in einer der Anordnung der Seitenplatte gegenüberliegenden Richtung offen ausgebildet sein. Das Anclipsen der Umlenkeinrichtung an der Leiste kann hierdurch besonders vereinfacht werden.

Um eine optisch ansprechende Spannung des Innenhimmels zu schaffen, bei der die Leiste vom Fahrzeuginnenraum nicht sichtbar ist, kann die Umlenkeinrichtung auf einer dem Innenhimmel abgewandten Seite der Leiste angeordnet sein. Hierbei kann die wenigstens eine Umlenkeinrichtung eine Durchführungsöffnung aufweisen, durch welche das Spannmittel der Spanneinrichtung ebenso wie durch die Aussparung der Leiste führbar ist. Ein Vorteil hierbei ist, dass die Spanneinrichtung an der insbesondere mit einem größeren Radius ausgebildeten Durchführungsöffnung der beispielsweise mit einem Kunststoff ausgebildeten Umlenkeinrichtung geführt werden kann und nicht an einer eventuell scharfen Kante der Leiste, welche vorzugsweise aus einem Metall gebildet ist. Die Gefahr einer Beschädigung des Spannmittels bei einer Verdecköffnungs- bzw. Verdeckschließbewegung kann hierdurch vorteilhafterweise reduziert werden.

Bei einer vorteilhaften Ausbildung eines erfindungsgemäßen Verdecks kann es vorgesehen sein, dass das wenigstens eine Spannmittel einerseits fest mit einem verdeck- oder karosseriefesten Anbindungspunkt verbindbar ist und andererseits mit dem Innenhimmel derart zusammenwirkt, dass das Spannmittel den Innenhimmel in geschlossener Verdeckposition in seiner aufgespannten Position hält und der Innenhimmel bei einer aus der geschlossenen Position bewegten Position des Verdecks mit seinem losen Bereich gegenüber dem Dachsegment und/oder dem Verdeckgestänge bewegbar ist. Hierbei kann das wenigstens eine Spannmittel direkt an dem Innenhimmel festgelegt sein, so dass das Spannmittel von dem verdeck- oder karosseriefesten Anbindungspunkt durch die Durchführungsöffnung der Umlenkeinrichtung und die Ausnehmung der Leiste zu dem Innenhimmel verläuft.

Zum Zusammenwirken des wenigstens einen Spannmittels mit dem Innenhimmel kann bei einer einfachen Ausbildung der Erfindung an dem Innenhimmel ein Ösenelement angeordnet sein, an welchem das Spannmittel festgelegt sein kann.

Das Vorsehen eines Ösenelements an dem Innenhimmel ist insbesondere vorteilhaft, wenn das wenigstens eine Spannmittel an einem dem verdeck- oder karosseriefesten Anbindungspunkt abgewandten Ende fest mit der Umlenkeinrichtung verbunden ist und somit von dem verdeck- oder karosseriefesten Anbindungspunkt durch die Durchführungsöffnung der Umlenkeinrichtung und die Aussparung der Leiste zu dem Innenhimmel geführt ist, dort durch das Ösenelement des Innenhimmels und zurück zu der Umlenkeinrichtung geführt und an dieser festgelegt ist.

Hierbei kann es einerseits vorgesehen sein, dass das dem verdeck- oder karosseriefesten Anbindungspunkt abgewandte Ende des wenigstens einen Spannmittels von dem Innenhimmel erneut durch die Aussparung der Leiste und die Durchführungsöffnung der Umlenkeinrichtung geführt und beispielsweise dort festlegbar ist. Eine derartige Festlegung des Spannmittels kann beispielsweise mittels eines Knotens erfolgen. Weiterhin kann das Spannmittel auch eine Hülse aufweisen, welche fest mit dem Spannmittel verbunden ist, wobei das Spannmittel durch den größeren Durchmesser im Bereich der Hülse an der Umlenkeinrichtung festgelegt wird.

Andererseits kann die Umlenkeinrichtung zur Festlegung des dem verdeck- oder karosseriefesten Anbindungspunkt abgewandten Endes des Spannmittels eine seitlich offene Ausnehmung aufweisen, in die das Ende des Spannmittels insbesondere einklemmbar ist, d. h. dass das dem verdeck- oder karosseriefesten Anbindungspunkt abgewandte Ende des wenigstens einen Spannmittels von dem Innenhimmel entweder durch die Aussparung der Leiste oder eine weitere versetzt zu der Aussparung der Leiste angeordnete Ausnehmung der Leiste und dann an der seitlich offenen Ausnehmung der Umlenkeinrichtung festgelegt ist. Eine Festlegung des dem verdeck- oder karosseriefesten Anbindungspunktes abgewandten Endes des Spannmittels an der Umlenkeinrichtung ist hierbei besonders einfach und schnell möglich, da dieses Ende des Spannmittels hierzu nicht erneut durch die Durchführungsöffnung geführt werden muss.

Eine derartige Festlegung des Spannmittels an der Umlenkeinrichtung ist insbesondere dann vorteilhaft, wenn die Aussparung der Leiste in einer Richtung offen ausgebildet ist. Auf das erneute Durchführen der Spanneinrichtung durch die Aussparung der Leiste kann dabei verzichtet werden und das dem Anlenkungspunkt entfernte Ende des Spannmittels direkt in der seitlichen Ausnehmung der Umlenkeinrichtung festgelegt werden. Die Montage der Umlenkeinrichtung ist hierdurch vorteilhafterweise vereinfacht.

Um auf das wenigstens eine Spannmittel wirkende Kräfte während einer Verdeckbewegung zu reduzieren, kann das wenigstens eine Spannmittel an seinem verdeck- oder karosseriefesten Ende mittels einer Federeinrichtung festgelegt sein, welche einen gewissen Bewegungsspielraum der Spannmittel insbesondere in Verdecklängsrichtung zulässt, so dass eventuell auftretende Spannungsspitzen reduziert werden können.

Bei einer besonders einfachen Ausbildung der Erfindung kann das wenigstens eine Spannmittel als Zugseil, beispielsweise als Draht oder ähnliches, ausgebildet sein.

Um eine gute Spannung des Innenhimmels in Fahrzeugquerrichtung in geschlossener Verdeckposition zu erreichen, kann es bei einer vorteilhaften Weiterbildung der Erfindung vorgesehen sein, dass mehrere Umlenkeinrichtungen mit jeweils einem mit dem Innenhimmel zusammenwirkenden Spannmittel zusammenwirken, wobei die Umlenkeinrichtungen jeweils lösbar an dem wenigstens einen Dachsegment und/oder dem Verdeckgestänge anbindbar sind.

Durch das Vorsehen mehrerer Spannmittel und damit zusammenwirkender Umlenkeinrichtungen kann eine zur Spannung des Innenhimmels in Verdeckquerrichtung erforderliche Kraft an mehreren Stellen in den losen Bereich des Innenhimmels eingeleitet werden. Hierzu ist es vorteilhaft, wenn die einzelnen Umlenkeinrichtungen in dem Bereich, in dem der lose Bereich des Innenhimmels in geschlossener Verdeckposition anliegt, verteilt angeordnet sind.

Bei der Anordnung von mehreren Umlenkeinrichtungen und Spannmitteln ist es vorteilhaft, wenn die Spannmittel einen gemeinsamen verdeck- oder karosseriefesten Anbindungspunkt aufweisen und dort insbesondere über eine gemeinsame Federeinrichtung gelagert sind.

Um eine Führung der Spannmittel, die in geschlossener Position mit einer weiter von dem verdeck- oder karosseriefesten Anbindungspunkt entfernt angeordneten Umlenkeinrichtung zusammenwirken, zu gewährleisten, sieht eine vorteilhafte Weiterbildung der Erfindung vor, dass wenigstens eine Umlenkeinrichtung einen in geschlossener Verdeckposition im Wesentlichen in Fahrzeuglängsrichtung angeordneten Längsführungsbereich aufweist, an dem wenigstens ein Spannmittel einer anderen Umlenkeinrichtung in Seitenbereichen des Verdecks im Bereich der Leiste führbar ist. Eine Führung der Spannmittel in den Seitenbereichen des Verdecks ist hierdurch auf besonders einfache Weise ohne zusätzliche Bauteile möglich.

Insbesondere wenn der Längsführungsbereich einen geschlossenen Querschnitt aufweist, kann auf einfache und sichere Weise verhindert werden, dass das wenigstens eine in dem Längsführungsbereich geführte Spannseil bei einer Verdeckbewegung aus dem Längsführungsbereich gleitet.

Der lose Bereich des Innenhimmels ist bei einer vorteilhaften Ausbildung der Erfindung in geschlossener Position des Verdecks an einem hinteren seitlichen Dachrahmen angeordnet. Hierdurch kann sichergestellt werden, dass eine Beschädigung des Innenhimmels durch bei einer Verdeckbewegung auf den Innenhimmel wirkende Kräfte verhindert ist.

Weitere Vorteile und vorteilhafte Ausführungen eines Verdecks eines Cabriolet-Fahrzeugs nach der Erfindung ergeben sich aus der Zeichnung und der Beschreibung.

Nachfolgend ist ein vorteilhaftes Ausführungsbeispiel eines Verdecks eines Cabriolet-Fahrzeugs anhand der Zeichnung prinzipmäßig beschrieben.

Es zeigt:
- Fig. 1: eine vereinfachte dreidimensionale Darstellung eines Ausschnitts eines Verdecks eines Cabriolet-Fahrzeugs mit einem Innenhimmel, welcher in einem lose mit einem hinteren Dachsegment verbundenen Bereich mittels einer Spanneinrichtung an einer an einem Dachrahmen des hinteren Dachsegments angeordneten Leiste angebunden ist;
- Fig. 2: eine vereinfachte Darstellung der Spanneinrichtung in Alleinstellung, wobei die Spanneinrichtung mit drei Umlenkeinrichtungen mit jeweils einem zugeordneten Spannmittel ausgebildet ist;
- Fig. 3: eine vereinfachte dreidimensionale Ansicht einer Umlenkeinrichtung in an der Leiste eingeclipster Position, wobei ersichtlich ist, dass das Spannmittel über ein Ösenelement mit dem Innenhimmel zusammenwirkt;
- Fig. 4: eine Prinzipskizze der L-förmig ausgebildeten Leiste der Figuren 1 bis 3, wobei eine in eine Aussparung der Leiste eingeclipste Umlenkeinrichtung ersichtlich ist;
- Fig. 5: eine vereinfachte dreidimensionale Ansicht einer Umlenkeinrichtung in einer ersten Position;
- Fig. 6: eine vereinfachte dreidimensionale Ansicht der Umlenkeinrichtung der Fig. 5 in einer zweiten Position; und
- Fig. 7: eine vereinfachte Seitenansicht der Umlenkeinrichtung der Figuren 5 und 6.

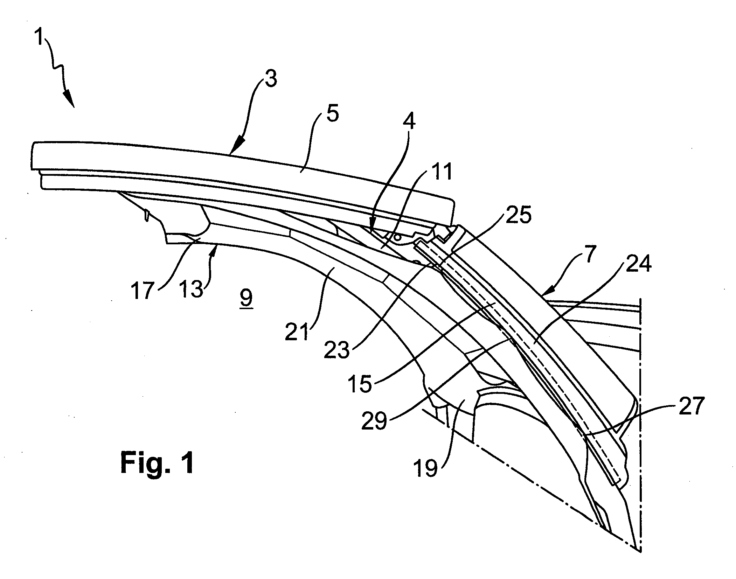

In Fig. 1 ist ein Ausschnitt eines Verdecks 3 eines Cabriolet-Fahrzeugs 1 dargestellt, welches vorliegend als Hard-Top-Verdeck ausgebildet ist und ein in geschlossener Verdeckposition an einem Windschutzscheibenrahmen des Cabriolet-Fahrzeugs 1 festlegbares vorderes Dachsegment 5 und ein heckwärts daran anschließendes hinteres Dachsegment 7 aufweist.

Zur automatisierten Verlagerung des Verdecks 3 zwischen seiner geschlossenen, einen Fahrzeuginnenraum 9 überspannenden Position und seiner offenen, den Fahrzeuginnenraum 9 wenigstens bereichsweise freigebenden Position ist ein Verdeckgestänge 11 vorgesehen, welches an einem nicht näher ersichtlichen Hauptlager des Verdecks 3 angelenkt ist. Das Verdeck 3 ist in der Fig. 1 in einer zwischenposition zwischen der geschlossenen Position und der offenen Position dargestellt.

Auf einer dem Fahrzeuginnenraum 9 zugewandten Seite des Verdecks 3 ist ein textiler Innenhimmel 13 angeordnet, welcher das vordere Dachsegment 5 und das hintere Dachsegment 7 in geschlossener Position des Verdecks 3 gegenüber dem Fahrzeuginnenraum 9 nahezu vollständig abdeckt, und welcher bei einer Verdecköffnungsbewegung mit dem Verdeck 3 in einen nicht näher dargestellten heckseitigen Ablageraum mitbewegt wird.

Der Innenhimmel 13 ist in einem vorderen ersten Bereich 17 des vorderen Dachsegments 5 fest mit dem vorderen Dachsegment 5 und in einem hinteren zweiten Bereich 19 des hinteren Dachsegments 7 fest mit dem hinteren Dachsegment 7 verbunden. In einem zwischen diesen Bereichen 17, 19 angeordneten dritten Bereich 21 ist der Innenhimmel 13 lose mit dem hinteren Dachsegment 7 verbunden, damit der Innenhimmel 13 bei einer Überführung des Verdecks 3 zwischen der geschlossenen Position und der offenen Position aufgrund von dabei auf den Innenhimmel wirkenden Kräften nicht beschädigt wird.

Der Innenhimmel 13 ist in dem losen Bereich 21 über eine Spanneinrichtung 23 an einer Leiste 15 angebunden, welche wiederum an einem seitlichen Dachrahmen 24 des hinteren Dachsegments 7 angeordnet ist und sich in geschlossener Position des Verdecks 3 annähernd über die gesamte Länge des seitlichen Dachrahmens 24 in Fahrzeuglängsrichtung erstreckt.

In der Fig. 1 ist lediglich die einer linken Fahrzeugseite zugeordnete Leiste 15 und die Spanneinrichtung 23 gezeigt. Das Verdeck 3 ist symmetrisch zu einer Mittellängsachse aufgebaut, so dass der Innenhimmel 13 auf einer rechten Fahrzeugseite analog mit einer Spanneinrichtung und einer Leiste angebunden ist. Im Folgenden wird die Spanneinrichtung 23 und die Leiste 15 der linken Fahrzeugseite stellvertretend für die Spanneinrichtung und die Leiste der rechten Fahrzeugseite beschrieben.

Wie der Fig. 1 zu entnehmen ist, wirkt der Innenhimmel 13 vorliegend an drei seitlichen Stellen über die Spanneinrichtung 23 mit der Leiste 15 zusammen. Eine erste Stelle 25 wirkt dabei bei geschlossenem Verdeck 3 mit einem fahrzeugfrontseitigen Bereich der Leiste, eine zweite 27 Stelle mit einem fahrzeugheckseitigen Bereich der Leiste und eine dritte Stelle 29 mit einem zwischen diesen Bereichen angeordneten Bereich über die Spanneinrichtung 23 mit der Leiste 15 zusammen.

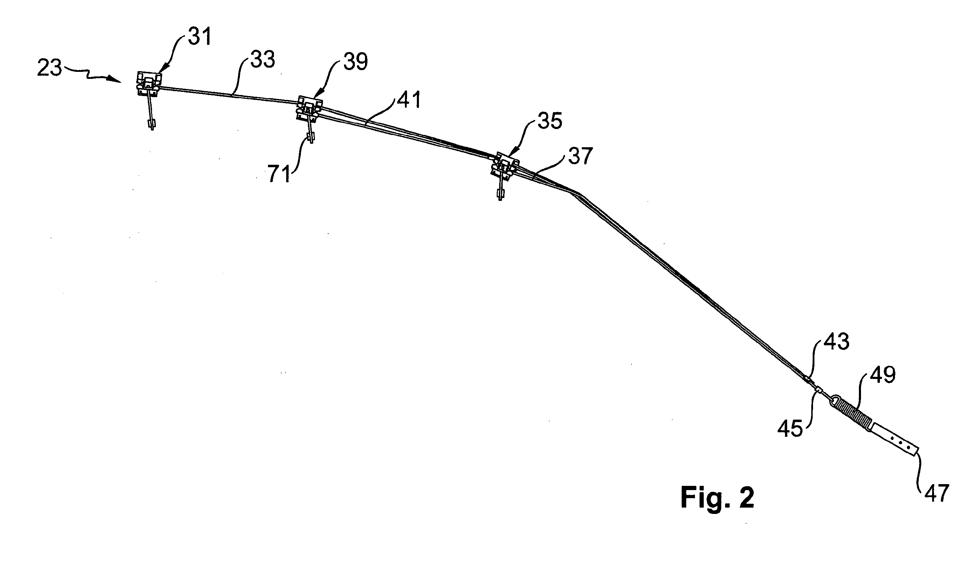

In der Fig. 2 ist die Spanneinrichtung 23 in Alleinstellung ersichtlich. Die Spanneinrichtung 23 weist vorliegend jeweils drei Umlenkeinrichtungen und drei als zugseile ausgebildete Spannmittel auf, wobei eine erste Umlenkeinrichtung 31 über ein erstes Zugseil 33 mit der ersten Stelle 25 des Innenhimmels 13, eine zweite Umlenkeinrichtung 35 über ein zweites Zugseil 37 mit der zweiten Stelle 27 des Innenhimmels 13 und eine dritte Umlenkeinrichtung 39 über ein drittes Zugseil 41 mit der dritten Stelle 29 des Innenhimmels 13 zusammenwirkt.

An einem der jeweiligen Umlenkeinrichtung 31, 35, 39 abgewandten Ende der hier als Drähte ausgebildeten Zugseile 33, 37, 41 sind diese über zwei Quetschverbinder 43, 45 miteinander verbunden, wobei an einem hierdurch gebildeten gemeinsamen Anbindungspunkt 47 eine Federeinrichtung 49 angebunden ist, mittels welcher die Zugseile 33, 37, 41 verdeckfest an dem Hauptlager des Verdecks 3 festgelegt sind.

Die Umlenkeinrichtungen 31, 35, 39 sind vorliegend baugleich ausgebildet, wobei die dritte Umlenkeinrichtung 39 im Folgenden stellvertretend für die erste Umlenkeinrichtung 31 und die zweite Umlenkeinrichtung 35 beschrieben wird.

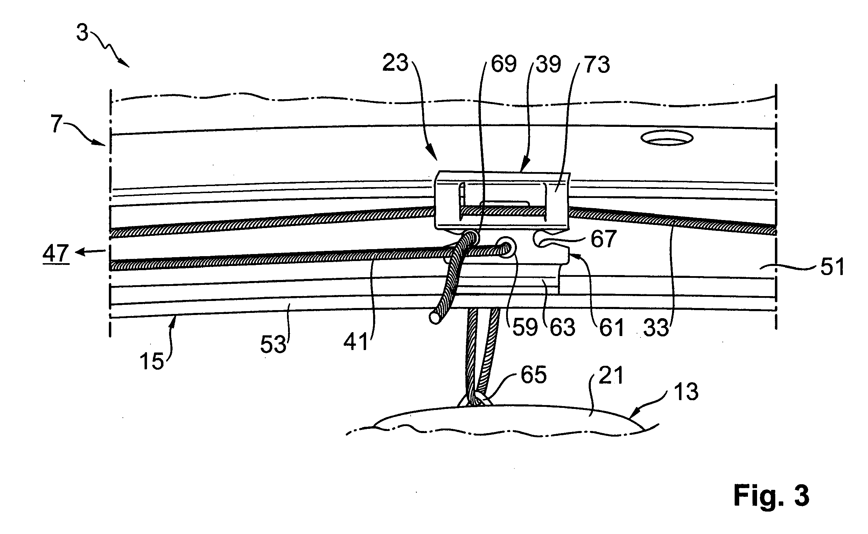

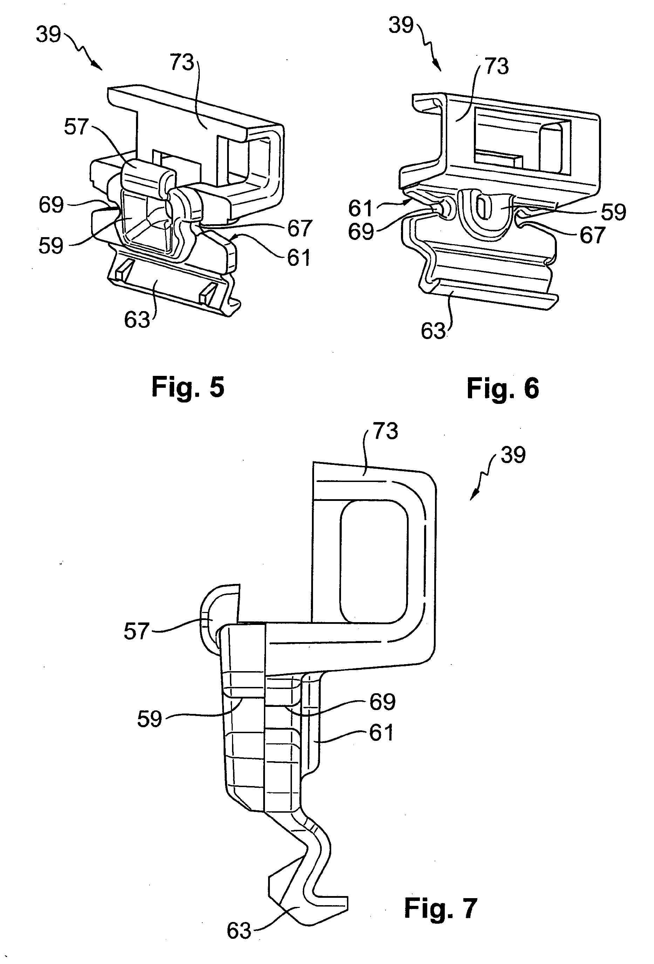

Die in den Figuren 5 bis 7 in Alleinstellung gezeigte dritte Umlenkeinrichtung 39 ist in der Fig. 3 in einer an der Leiste 15 angeclipsten Position gezeigt.

Die Leiste 15 weist hierzu einen L-förmigen Querschnittsbereich mit einer Bodenplatte 51 und einer in einem spitzen Winkel daran angeordneten Seitenplatte 53 auf, wobei die Seitenplatte 53 hierbei in einer dem Innenhimmel 13 abgewandten Richtung an der Bodenplatte 51 angeordnet ist.

Zum Anclipsen der Umlenkeinrichtung 39 an der Leiste 15, weist die Bodenplatte 51 eine etwa rechteckige Aussparung 55 auf, in die die Umlenkeinrichtung 39 mit einem in den Figuren 5 bis 7 ersichtlichen Hakenteil 57 und einem Bereich einer eine Durchführungsöffnung 59 aufweisenden Verbindungsbereich 61 einführbar ist. An einem dem Hakenteil 57 abgewandten Ende des Verbindungsbereichs 61 ist ein gegenüber dem Verbindungsbereich 61 federnd angeordnetes, vorkragendes nasenförmiges Teil 63 mit einem annähernd U-förmigen Querschnitt angebunden.

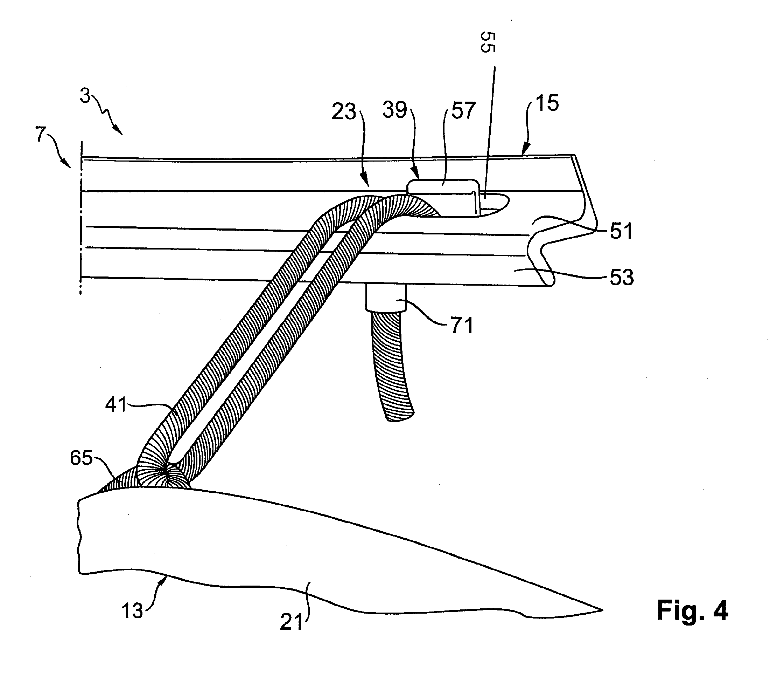

Zur clipartigen Festlegung der dritten Umlenkeinrichtung 39 an der Leiste 15 wird das Hakenteil 57 gemeinsam mit einem Bereich des Verbindungsbereichs 61 gemäß der Fig. 4 von unten in die Aussparung 55 der Leiste 15 eingeführt, so dass das Hakenteil 57 der dritten Umlenkeinrichtung 39 mit der Aussparung 55 der Leiste 15 eine Hinterschneidung bildet. Anschließend wird das nasenförmige Teil 63 in den von der Bodenplatte 51 und der Seitenplatte 53 gebildeten spitzen Winkel gedrückt, so dass die dritte Umlenkeinrichtung 39 durch die federnde Anordnung des nasenförmigen Teils 63 an der Leiste 15 einschnappt. Die dritte Umlenkeinrichtung 39 ist hierdurch stabil, aber einfach austauschbar an der Leiste 15 festgelegt.

Bei der in der Fig. 3 an der Leiste 15 festgelegten dritten Umlenkeinrichtung 39 ist ersichtlich, dass das zugeordnete dritte Zugseil 41 von dem Anbindungspunkt 47 kommend durch die Durchführungsöffnung 59 der dritten Umlenkeinrichtung 39 und die Aussparung 55 der Leiste 15 zu dem Innenhimmel 13 geführt ist, von dort durch ein in einem Randbereich des Innenhimmels 13 angeordnetes Ösenelement 65 und dann zurück durch die Aussparung 55 der Leiste 15 geführt und in einer von zwei seitlich offenen Ausnehmungen 67, 69, welche seitlich neben der Durchführungsöffnung 59 der dritten Umlenkeinrichtung 39 angeordnet sind, der dritten Umlenkeinrichtung 39 festgelegt ist.

Die seitlich offenen Ausnehmungen 67, 69 sind dabei derart ausgebildet, dass das dem Anbindungspunkt 47 abgewandte Ende des dritten Zugseils 41 seitlich in die eine Art offenes Schlüsselloch darstellende Ausnehmung 67 bzw. 69 eingeführt und in ihr festgeklemmt wird. Um ein Herausrutschen des dritten Zugseils 41 in Erstreckungsrichtung des zugseils 41 zu verhindern, weist das Zugseil 41 an seinem dem Anbindungspunkt 47 abweisenden Ende eine fest mit dem dritten Zugseil 41 verbundene Hülse, welche vorliegend als Quetschverbindung 71 ausgebildet ist, auf, so dass der Querschnitt des dritten Zugseils 41 an dieser Stelle mit einem größeren Querschnitt als die jeweilige seitlich offene Ausnehmung 67 bzw. 69 ausgebildet ist.

An der dem nasenförmigen Teil 63 und somit dem von der Bodenplatte 51 und der Seitenplatte 53 der Leiste 15 gebildeten spitzen Winkel abgewandten Seite des Verbindungsbereichs 61 der dritten Umlenkeinrichtung 39 ist weiterhin ein in Einbausituation der Umlenkeinrichtung 39 in Längsrichtung der Leiste 15 angeordneter Längsführungsbereich 73 vorliegend im Wesentlichen in Form zweier mit einem rechteckigen Querschnitt ausgebildeter Röhren vorgesehen, durch welche das erste Zugseil 33 - wie in Fig. 3 ersichtlich - zu der ersten Umlenkeinrichtung 35 geführt ist. Entsprechend werden das erste Zugseil 33 und das dritte Zugseil 41 durch den Längsführungsbereich 73 der zweiten Umlenkeinrichtung 35 geführt.

Bei einer Überführung des Verdecks 3 von seiner geschlossenen Position in seine offene Position wird der Abstand zwischen dem verdeckfesten Anbindungspunkt 47 der Zugseile 33, 37, 41 und der Umlenkeinrichtung 31, 35, 39 verkürzt, so dass die Zugseile 33, 37, 41 weiter durch die jeweilige Durchführungsöffnung 59 geführt werden können und der Innenhimmel 13 sich somit weiter von der Leiste 15 und dem seitlichen Dachrahmen 24 entfernen kann.

Bei einer Überführung des Verdecks 3 von seiner offenen Position in seine geschlossene Position wird der Abstand der Umlenkeinrichtungen 31, 35, 39 zu dem verdeckfesten Anbindungspunkt 47 wieder vergrößert, so dass die Zugseile 33, 37, 41 den Innenhimmel 13 über die Stellen 25, 27, 29 wieder an die Leiste 15 und somit den seitlichen Dachrahmen 24 des hinteren Dachsegments 7 heranziehen, womit der Innenhimmel 13 in geschlossener Verdeckposition das Verdeck 3 an seiner dem Fahrzeuginnenraum 9 zugewandten Seite vollständig verdeckt.

## Patentansprüche

1. Verdeck eines Cabriolet-Fahrzeugs (1) mit wenigstens zwei Dachsegmenten (5, 7), welche mittels eines Verdeckgestänges (11) zwischen einer einen Fahrzeuginnenraum (9) abdeckenden geschlossenen und einer den Fahrzeuginnenraum (9) wenigstens bereichsweise freigebenden offenen Position verfahrbar sind, und einem dem Fahrzeuginnenraum (9) zugewandten Innenhimmel (13), welcher wenigstens bereichsweise lose an wenigstens einem Dachsegment (5, 7) und/oder dem Verdeckgestänge (11) geführt ist, wobei eine Spanneinrichtung (23) mit wenigstens einem Spannmittel (33, 37, 41) vorgesehen ist, die derart wirkt, dass der Innenhimmel (13) in geschlossener Position des Verdecks (3) eine aufgespannte Position einnimmt,
**dadurch gekennzeichnet,**
**dass** wenigstens eine Umlenkeinrichtung (31, 35, 39) vorgesehen ist, und
**dass** die wenigstens eine Umlenkeinrichtung (31, 35, 39) lösbar an dem wenigstens einen Dachsegment (5, 7) und/oder dem Verdeckgestänge (11) angeordnet ist.

2. Verdeck nach Anspruch 1,
**dadurch gekennzeichnet,**
**dass** die wenigstens eine Umlenkeinrichtung (31, 35, 39) an dem wenigstens einen Dachsegment (5, 7) und/oder dem Verdeckgestänge (11) anclipsbar ist.

3. Verdeck nach einem der Ansprüche 1 oder 2,
**dadurch gekennzeichnet,**
**dass** die wenigstens eine Umlenkeinrichtung (31, 35, 39) lösbar mit einer an wenigstens einem Dachsegment (5, 7) und/oder dem Verdeckgestänge (11) angeordneten Leiste (15), insbesondere einer Leiste eines sich in Fahrzeuglängsrichtung erstreckenden seitlichen Dachrahmens (24) eines Dachsegments (5, 7), verbunden ist.

4. Verdeck nach Anspruch 3,
**dadurch gekennzeichnet,**
**dass** die Leiste (15) wenigstens einen im Querschnitt L-förmigen Bereich mit einer Bodenplatte (51) und einer in einem vorzugsweise spitzen Winkel daran angeordneten Seitenplatte (53) aufweist, wobei in der Bodenplatte (51) wenigstens eine Aussparung (55) vorgesehen ist, und wobei die wenigstens eine Umlenkeinrichtung (31, 35, 39) derart ausgebildet ist, dass sie mit einem ersten Bereich (61) in die Aussparung (55) einsetzbar und einem zweiten nasenförmigen Teil (63) in den von der Leiste (15) gebildeten Winkel einclipsbar ist.

5. Verdeck nach Anspruch 4,
**dadurch gekennzeichnet,**
**dass** die Aussparung (55) insbesondere in einer der Anordnung der Seitenplatte (53) entgegengesetzten Richtung offen ausgebildet ist.

6. Verdeck nach einem der Ansprüche 3 bis 5,
**dadurch gekennzeichnet,**
**dass** die wenigstens eine Umlenkeinrichtung (31, 35, 39) eine Durchführungsöffnung (59) aufweist, durch welche das Spannmittel (33, 37, 41) der Spanneinrichtung (23) ebenso wie durch die Aussparung (55) der Leiste (15) führbar ist.

7. Verdeck nach einem der Ansprüche 1 bis 6,
**dadurch gekennzeichnet,**
**dass** das wenigstens eine Spannmittel (33, 37, 41) einerseits fest mit einem verdeck- oder karosseriefesten Anbindungspunkt (47) verbindbar ist und andererseits mit dem Innenhimmel (13) derart zusammenwirkt, dass das Spannmittel (33, 37, 41) den Innenhimmel (13) in geschlossener Verdeckposition in seiner aufgespannten Position hält und der Innenhimmel (13) bei einer aus der geschlossenen Position bewegten Position des Verdecks (3) mit seinem losen Bereich (21) gegenüber dem Dachsegment (5, 7) und/oder dem Verdeckgestänge (11) bewegbar ist.

8. Verdeck nach einem der Ansprüche 1 bis 7,
**dadurch gekennzeichnet,**
**dass** das Spannmittel (33, 37, 41) über ein Ösenelement (65) mit dem Innenhimmel (13) zusammenwirkt.

9. Verdeck nach einem der Ansprüche 7 oder 8,
**dadurch gekennzeichnet,**
**dass** das Spannmittel (33, 37, 41) an einem dem verdeck- oder karosseriefesten Anbindungspunkt (47) abgewandten Ende fest mit der Umlenkeinrichtung (31, 35, 39) verbunden ist.

10. Verdeck nach Anspruch 9,
**dadurch gekennzeichnet,**
**dass** die Umlenkeinrichtung (31, 35, 39) zur Festlegung des dem verdeck- oder karosseriefesten Anbindungspunktes (47) abgewandten Endes des Spannmittels (33, 37, 41) wenigstens eine seitlich offene Ausnehmung (67) aufweist, in die das Ende des Spannmittels (3, 37, 41) insbesondere einklemmbar ist.

11. Verdeck nach einem der Ansprüche 7 bis 10,
**dadurch gekennzeichnet,**
**dass** das wenigstens eine Spannmittel (33, 37, 41) an seinem verdeck- oder karosseriefesten Ende mittels einer Federeinrichtung (49) festgelegt ist.

12. Verdeck nach einem der Ansprüche 1 bis 11,
**dadurch gekennzeichnet,**
**dass** mehrere Umlenkeinrichtungen (31, 35, 39) mit jeweils einem mit dem Innenhimmel (13) zusammenwirkenden Spannmittel (33, 37, 41) zusammenwirken, wobei die Umlenkeinrichtungen (31, 35, 39) jeweils lösbar an dem Dachsegment (5, 7) oder dem Verdeckgestänge (11) anbindbar sind.

13. Verdeck nach Anspruch 12,
**dadurch gekennzeichnet,**
**dass** die Spannmittel (33, 37, 41) einen gemeinsamen verdeck- oder karosseriefesten Anbindungspunkt (47) aufweisen.

14. Verdeck nach einem der Ansprüche 12 oder 13,
**dadurch gekennzeichnet,**
**dass** wenigstens eine Umlenkeinrichtung (31, 35, 39) einen in geschlossener Verdeckposition im Wesentlichen in Fahrzeuglängsrichtung angeordneten Längsführungsbereich (73) aufweist, an dem ein Spannmittel (33, 37, 41) einer anderen Umlenkeinrichtung (31, 35, 39) führbar ist.

15. Verdeck nach einem der Ansprüche 1 bis 14,
**dadurch gekennzeichnet,**
**dass** der lose Bereich (21) des Innenhimmels (13) in geschlossener Position des Verdecks (3) an einem hinteren seitlichen Dachrahmen (24) angeordnet ist.

## Claims

1. A hood for a convertible vehicle (1), comprising at least two roof segments (5, 7) which are displaceable, by means of a hood linkage (11), between a closed position covering a passenger compartment (9) and an open position at least partly uncovering said passenger compartment (9), said hood further comprising an inside roof lining (13) facing the passenger compartment (9) and loosely guided, at least partly, on at least one roof segment (5, 7) and/or on the hood linkage (11), wherein a tensioning device (23) comprising at least one tensioning means (33, 37, 41) is provided, said tensioning device (23) causing the roof lining (13) to occupy an opened position when the hood (3) is in its closed position, **characterised in that** at least one redirecting device (31, 35, 39) is provided and that said at least one redirecting device (31, 35, 39) is releasably arranged on the at least one roof segment (5, 7) and/or on the hood linkage (11).

2. The hood according to claim 1, **characterised in that** the at least one redirecting device (31, 35, 39) can be clip-fastened to the at least one roof segment (5, 7) and/or the hood linkage (11).

3. The hood according to any one of claims 1 or 2, **characterised in that** the at least one redirecting device (31, 35, 39) is releasably connected to a moulding (15) mounted to at least one roof segment (5, 7) and/or to the hood linkage (11), in particular a moulding of a lateral roof frame (24) of a roof segment (5, 7), said roof frame (24) extending in the longitudinal vehicle direction.

4. The hood according to claim 3, **characterised in that** the moulding (15) comprises at least one region with an L-shaped cross-section and with a base plate (51), and a lateral plate (53) arranged thereon, preferably at an acute angle, said base plate (51) being provided with at least one recess (55) and said at least one redirecting device (31, 35, 39) being provided such that it can be inserted with a first region (61) into the recess (55) and can be clip-fastened by a second nose-shaped part (63) into the angle formed by the moulding (15).

5. The hood according to claim 4, **characterised in that** the recess (55) is particularly provided such that it is open in a direction opposed to the arrangement of the lateral plate (53).

6. The hood according to any one of claims 3 to 5, **characterised in that** the at least one redirecting device (31, 35, 39) comprises a passage opening (59) through which the tensioning means (33, 37, 41) of the tensioning device (23) can be guided as well as through the recess (55) of the moulding (15).

7. The hood according to any one of claims 1 to 6, **characterised in that** the at least one tensioning means (33, 37, 41) can be securely connected, on the one hand, to a connecting point (47) fixedly arranged on the hood or on the vehicle body and, on the other hand, cooperates with the inside roof lining (13) in such a manner that the tensioning means (33, 37, 41) keeps the inside roof lining (13) in its opened position, when the hood is in its closed position, and the inside roof lining (13) can be moved, with its loose region (21), with respect to the roof segment (5, 7) and/or the hood linkage (11) when the hood (3) is in a position attained by moving the hood (3) out of its closed position.

8. The hood according to any one of claims 1 to 7, **characterised in that** the tensioning means (33, 37, 41) cooperates with the inside roof lining (13) via an eyelet element (65).

9. The hood according to any one of claims 7 or 8, **characterised in that** the tensioning means (33, 37, 41) is securely connected to the redirecting device (31, 35, 39) at an end facing away from the connecting point (47) fixedly arranged on the hood or on the vehicle body.

10. The hood according to claim 9, **characterised in that** the redirecting device (31, 35, 39) comprises at least one laterally open recess (67) for fixing the end of the tensioning means (33, 37, 41) facing away from the connecting point (47) fixedly arranged on the hood or on the vehicle body, into which recess (67) the end of the tensioning means (3, 37, 41) can be clamped, in particular.

11. The hood according to any one of claims 7 to 10, **characterised in that** the at least one tensioning means (33, 37, 41) is fixed, at its end fixed to the hood or to the vehicle body, by means of a spring device (49).

12. The hood according to any one of claims 1 to 11, **characterised in that** a plurality of redirecting devices (31, 35, 39) each cooperate with a respective tensioning means (33, 37, 41) cooperating with the inside roof lining (13), and each redirecting device (31, 35, 39) can be releasably connected to the roof segment (5, 7) or to the hood linkage (11).

13. The hood according to claim 12, **characterised in that** the tensioning means (33, 37, 41) comprise a common connecting point (47) fixedly arranged on the hood or on the vehicle body.

14. The hood according to any one of claims 12 or 13, **characterised in that** at least one redirecting device (31, 35, 39) comprises a longitudinal guiding region (73) along which a tensioning means (33, 37, 41) of another redirecting device (31, 35, 39) can be guided, said longitudinal guiding region (73) being arranged substantially in the longitudinal vehicle direction when the hood is in its closed position.

15. The hood according to any one of claims 1 to 14, **characterised in that** the loose region (21) of the inside roof lining (13) is arranged at a rear lateral roof frame (24) when the hood (3) is in its closed position.

## Revendications

1. Capote d'un véhicule cabriolet (1), ladite capote comportant au moins deux segments de toit (5, 7) qui sont déplaçables, au moyen d'une tringlerie de capote (11), entre une position fermée recouvrant un habitacle (9) et une position ouverte découvrant ledit habitacle (9) au moins partiellement, ladite capote comportant en outre un habillage de plafond (13) tourné vers l'habitacle (9) et guidé, de manière lâche, au moins partiellement, sur au moins un segment de toit (5, 7) et/ou sur la tringlerie de capote (11), un dispositif tendeur (23) comportant au moins un moyen tendeur (33, 37, 41) étant prévu, ledit dispositif tendeur (23) ayant pour effet que l'habillage de plafond (13) occupe une position ouverte lorsque la capote (3) est en position fermée, **caractérisé en ce que** l'on prévoit au moins un dispositif de déviation (31, 35, 39) et **en ce que** ledit au moins un dispositif de déviation (31, 35, 39) est disposé de manière amovible sur ledit au moins un segment de toit (5, 7) et/ou sur la tringlerie de capote (11).

2. Capote selon la revendication 1, **caractérisé en ce que** ledit au moins un dispositif de déviation (31, 35, 39) peut être clipsé dans ledit au moins un segment de toit (5, 7) et/ou ladite tringlerie de capote (11).

3. Capote selon l'une quelconque des revendications 1 ou 2, **caractérisé en ce que** ledit au moins un dispositif de déviation (31, 35, 39) est relié de manière amovible à une baguette (15) montée sur au moins un segment de toit (5, 7) et/ou sur ladite tringlerie de capote (11), notamment une baguette d'un cadre de toit latéral (24) d'un segment de toit (5, 7), ledit cadre de toit (24) s'étendant en direction longitudinale du véhicule.

4. Capote selon la revendication 3, **caractérisé en ce que** la baguette (15) comporte au moins une région avec une section transversale sous forme d'un L et avec une plaque de fond (51) et, disposé sur cette dernière, de préférence sous un angle aigu, une plaque latérale (53), ladite plaque de fond (51) présentant au moins un évidement (55) et ledit au moins un dispositif de déviation (31, 35, 39) étant réalisé de manière à pouvoir être inséré, par une première région (61), dans l'évidement (55) et à pouvoir être clipsé, par une deuxième partie (63) sous forme d'un nez, dans l'angle constitué par la baguette (15).

5. Capote selon la revendication 4, **caractérisé en ce que** l'évidement (55) est réalisé notamment de manière à être ouvert dans une direction opposée à l'arrangement de la plaque latérale (53).

6. Capote selon l'une quelconque des revendications 3 à 5, **caractérisé en ce que** ledit au moins un dispositif de déviation (31, 35, 39) comporte une ouverture de passage (59) à travers laquelle le moyen tendeur (33, 37, 41) du dispositif tendeur (23) peut être guidé ainsi qu'à travers l'évidement (55) de la baguette (15).

7. Capote selon l'une quelconque des revendications 1 à 6, **caractérisé en ce que** ledit au moins un moyen tendeur (33, 37, 41) peut être relié de manière fixe, d'un côté, à un point d'attache (47) fixé à la capote ou à la carrosserie et coopère, de l'autre côté, avec l'habillage de plafond (13) de sorte que le moyen tendeur (33, 37, 41) maintienne l'habillage de plafond (13) dans sa position ouverte, lorsque la capote est en position fermée, et permettant de déplacer l'habillage de plafond (13), par sa région lâche (21), par rapport au segment de toit (5, 7) et/ou à la tringlerie de capote (11) lorsque la capote (3) se trouve dans une position sortie de sa position fermée.

8. Capote selon l'une quelconque des revendications 1 à 7, **caractérisé en ce que** le moyen tendeur (33, 37, 41) coopère avec l'habillage de plafond (13) au moyen d'un oeillet (65).

9. Capote selon l'une quelconque des revendications 7 ou 8, **caractérisé en ce que** le moyen tendeur (33, 37, 41) est relié de manière fixe au dispositif de déviation (31, 35, 39) par une extrémité détournée du point d'attache (47) fixé à la capote ou à la carrosserie.

10. Capote selon la revendication 9, **caractérisé en ce que** le dispositif de déviation (31, 35, 39) comporte au moins un évidement (67) latéralement ouvert pour fixer l'extrémité du moyen tendeur (33, 37, 41) détournée du point d'attache (47) fixé à la capote ou à la carrosserie, ledit évidement (67) permettant notamment le serrage de l'extrémité du moyen tendeur (3, 37, 41) dans celui-ci.

11. Capote selon l'une quelconque des revendications 7 à 10, **caractérisé en ce que** ledit au moins un moyen tendeur (33, 37, 41) est monté fixe, par son extrémité fixée à la capote ou à la carrosserie, au moyen d'un dispositif à ressort (49).

12. Capote selon l'une quelconque des revendications 1 à 11, **caractérisé en ce que** chacun d'une pluralité de dispositifs de déviation (31, 35, 39) coopère avec un moyen tendeur (33, 37, 41) respectif coopérant avec l'habillage de plafond (13), chacun desdits dispositifs de déviation (31, 35, 39) pouvant être relié de manière amovible au segment de toit (5, 7) ou à la tringlerie de capote (11).

13. Capote selon la revendication 12, **caractérisé en ce que** les moyens tendeurs (33, 37, 41) comportent un point d'attache commun (47) fixé à la capote ou à la carrosserie.

14. Capote selon l'une quelconque des revendications 12 ou 13, **caractérisé en ce qu'**au moins un dispositif de déviation (31, 35, 39) comporte une région de guidage longitudinal (73) selon laquelle on peut guider un moyen tendeur (33, 37, 41) d'un autre dispositif de déviation (31, 35, 39), ladite région de guide longitudinal (73) étant disposée sensiblement en direction longitudinale du véhicule lorsque la capote est en position fermée.

15. Capote selon l'une quelconque des revendications 1 à 14, **caractérisé en ce que** la région lâche (21) de l'habillage de plafond (13) est disposée à un cadre de toit latéral arrière (24) lorsque la capote (3) est en position fermée.
